Europäisches Patentamt

European Patent Office

Office européen des brevets

(19)

(11) Numéro de publication : **0 451 059 A1**

# (12) DEMANDE DE BREVET EUROPEEN

(21) Numéro de dépôt : **91400930.3**

(22) Date de dépôt : **05.04.91**

(51) Int. Cl.⁵ : **G06K 19/07**

(30) Priorité : **06.04.90 FR 9004428**

(43) Date de publication de la demande :
**09.10.91 Bulletin 91/41**

(84) Etats contractants désignés :
**DE ES GB IT**

(71) Demandeur : **VALEO SECURITE HABITACLE
12 bis, rue Maurice Berteaux, B.P. 38
F-78290 Croissy-Sur-Seine (FR)**

(72) Inventeur : **Leflour, Jean
7 rue du Hameau
F-75015 Paris (FR)**

(74) Mandataire : **Martin, Jean-Jacques et al
Cabinet REGIMBEAU 26, Avenue Kléber
F-75116 Paris (FR)**

(54) Circuit d'émission d'un rayonnement radioélectrique à haute fréquence, notamment pour un dispositif électronique portatif inclus dans un système de télécommande interactive pour véhicule automobile.

(57)　　L'invention concerne un circuit d'émission radiofréquence pour un dispositif électronique autonome alimenté par batterie, notamment pour l'envoi de données d'identification dudit dispositif ou d'un porteur de celui-ci.

　　Ce circuit est caractérisé en ce qu'il comprend un circuit d'oscillation et de modulation (10) dans la gamme des ultra-hautes fréquences et une antenne comprenant un doublet magnétique (L) auquel est couplé un doublet électrique (B).

　　Application notamment aux systèmes de télécommande interactive à carte portative (100) pour véhicules automobiles.

EP 0 451 059 A1

FIG_5

La présente invention concerne d'une façon générale les dispositifs d'interrogation-réponse à distance par voie électromagnétique, notamment à des fins d'identification de personnes ou d'objets, par exemple dans le cadre de systèmes de télécommande interactive pour véhicules automobiles ou analogues. Elle concerne plus particulièrement un nouveau circuit d'émission pour un élément portatif capable par exemple de réagir à la réception de signaux déterminés pour lui-même produire un signal de réponse, par exemple d'identification.

Dans les ensembles de télécommande interactive, qui sont destinés à assurer la reconnaissance à distance du conducteur d'un véhicule lorsqu'il s'en approche, un module électronique de bord intégré au véhicule envoie un signal d'interrogation à une "étiquette électronique", généralement réalisée sous forme d'un badge ou d'une carte plate de petites dimensions portée par le conducteur, par exemple dans une poche. La carte reçoit le signal d'interrogation, analyse celui-ci au moyen d'un microprocesseur incorporé à la carte et élabore ou lit en mémoire un signal d'identification codé propre à la carte, qui est émis en retour par cette dernière en direction du module de bord. Celui-ci peut alors effectuer un certain nombre d'actions, et notamment provoquer le déverrouillage des issues, ou encore effectuer automatiquement un réglage de certains organes tels que les rétroviseurs et les sièges pour les adapter à la stature et aux habitudes de conduite du porteur de la carte.

L'une des principales difficultés rencontrées avec un tel type de télécommande réside en ce que la carte portée par le conducteur doit être de dimensions et de poids réduits (typiquement ceux d'une carte de crédit), tout en présentant une autonomie importante, de l'ordre d'une année ou davantage, de sorte que la consommation électrique des circuits qu'elle contient est un paramètre déterminant de sa conception.

La présente invention vise à proposer, dans une telle carte ou dans un contexte analogue, un circuit d'émission dont le rendement soit optimisé, c'est-à-dire dont le rapport entre la puissance rayonnée et la puissance électrique effectivement consommée soit le plus élevé possible, afin d'améliorer l'autonomie de la carte pour une portée d'émission donnée. Un autre objet de l'invention est de proposer un circuit dont la tenue en fréquence soit extrêmement bonne.

L'invention propose à cet effet un circuit d'émission radiofréquence pour un dispositif électronique autonome alimenté par batterie, notamment pour l'envoi de données d'identification dudit dispositif ou d'un porteur de celui-ci, caractérisé en ce qu'il comprend un circuit d'oscillation et de modulation dans la gamme des ultra-hautes fréquences et une antenne comprenant un doublet magnétique auquel est couplé un doublet électrique.

Des aspects préférés, mais non limitatifs, du circuit de la présente invention sont exposés ci-dessous:

– le doublet magnétique consiste en une première boucle simple, fermée sur la sortie du circuit d'oscillation et de modulation, et le doublet électrique consiste en une seconde boucle simple, fermée sur elle-même et localement accolée à la première boucle, les première et seconde boucles se comportant respectivement comme le primaire et le secondaire d'un couplage de type autotransformateur.

– les première et seconde boucles sont réalisées sous forme de pistes d'un circuit imprimé.

– la seconde boucle est située sur un prolongement du circuit imprimé portant la première boucle et le circuit d'oscillation et de modulation.

– la seconde boucle est située autour de la première boucle et du circuit d'oscillation et de modulation.

– le doublet magnétique consiste en une boucle simple fermée sur la sortie du circuit d'oscillation et de modulation et le doublet électrique consiste en un brin d'antenne.

– le brin d'antenne est soit relié directement à une sortie du circuit d'oscillation et de modulation, soit couplé à la boucle magnétique en un point intermédiaire de celle-ci.

– dans le cas où le dispositif électronique comporte en outre un circuit de réception de signaux radioélectriques via une antenne formée par une boucle de courant, le brin d'antenne est constitué par une partie de ladite boucle de courant et est délimité deux selfs de choc, et le couplage entre le brin d'antenne et le doublet magnétique est réalisée via un condensateur.

– le doublet magnétique et le brin d'antenne sont réalisés sous forme de pistes d'un circuit imprimé.

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels:

la figure 1 est un schéma de principe d'un circuit émetteur selon la présente invention,

la figure 2 est un schéma détaillé d'un circuit de l'invention,

les figures 3a et 3b illustrent deux premiers modes de réalisation de la partie formant antenne du circuit,

les figures 4a et 4b illustrent deux seconds modes de réalisation de la partie formant antenne, et

la figure 5 illustre schématiquement un dispositif électronique sous forme de carte incorporant un circuit émetteur selon l'invention ainsi qu'un circuit récepteur.

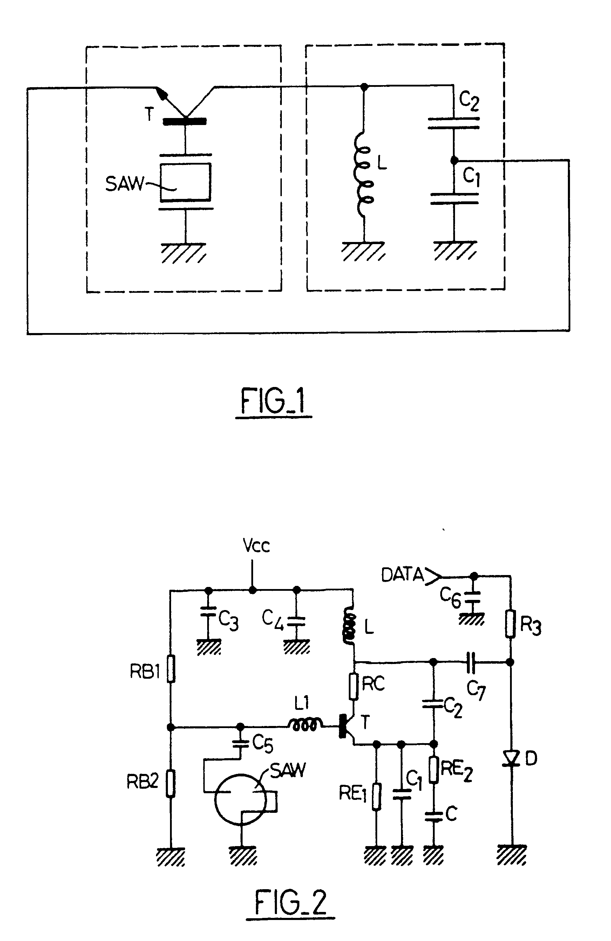

En référence tout d'abord à la figure 1, un circuit d'émission dans la gamme UHF selon l'invention, pour un dispositif électronique portatif tel qu'une carte d'un système de télécommande interactive de véhicule automobile, est basé sur un oscillateur Colpitts de type classique, dont le principe est rappelé en figure 1. Un oscillateur à ondes de surface SAW attaque la base d'un transistor bipolaire NPN unique T dont le collecteur est relié à un circuit d'accord comprenant une self L incluse dans l'antenne d'émission et deux condensateurs série C1 et C2. La liaison entre le point commun entre C1 et C2 et l'émetteur de T constitue une boucle de réaction.

Un tel circuit est réputé pour sa bonne tenue en fréquence.

En figure 2 est donné un exemple détaillé d'un tel circuit. Il comprend, outre les composants SAW, T, L, C1 et C2 tels que décrits ci-dessus, deux résistances de polarisation de base RB1 et RB2, une première résistance d'émetteur RE1, une seconde résistance d'émetteur RE2 en série avec un condensateur de découplage C, deux condensateurs de découplage d'alimentation C3 et C4, une self L1 entre le point milieu de RB1 et RB2 et la base de T, un condensateur C5 entre l'oscillateur SAW et le point milieu de RB1 et RB2, une résistance de collecteur RC de faible valeur, et un circuit d'entrée des données à transmettre comprenant un condensateur C6 entre l'entrée de données DATA et la masse, une résistance R3 en série avec une diode D dont la cathode est reliée à la masse, et un condensateur C7 entre la jonction R3-D et la jonction L-C2.

Le circuit est alimenté par une tension continue positive $V_{cc}$ de l'ordre de 5,5 volts, fournie par une ou plusieurs batteries.

Le fonctionnement d'un tel circuit classique ne sera pas décrit ici, et l'on se réfèrera à la littérature technique pertinente.

Dans le cas où l'élément rayonnant est une simple boucle de courant ou doublet magnétique, la puissance rayonnée est limitée, par exemple de l'ordre de quelques microwatts.

Selon un aspect essentiel de la présente invention, pour accroître la puissance rayonnée, on couple sur la boucle magnétique un doublet électrique. Ceci permet de multiplier la puissance rayonnée par un coefficient de l'ordre de 10 ou davantage.

Le comportement électrique du doublet électrique est de type résistif, si bien qu'aucune variation de la fréquence centrale du circuit oscillant n'est induite par son adjonction. On peut ainsi obtenir une meilleure immunité de l'oscillateur vis-à-vis de l'environnement (par exemple présence d'une plaque métallique ou analogue). Par ailleurs, une telle solution permet d'accroître le rapport entre la puissance rayonnée et la puissance active dans l'antenne; en effet, avec l'adjonction d'un tel doublet électrique, la résistance de rayonnement augmente tandis que la résistance de pertes par effet Joule reste constante.

Dans un premier mode de réalisation, le doublet électrique peut être constitué par un brin d'antenne couplé à la boucle magnétique L par une connexion électrique appropriée. Le brin d'antenne peut être soit en prise directe avec le collecteur de T, c'est-à-dire avec une extrémité de la boucle magnétique L, soit encore relié à un point intermédiaire de ladite boucle magnétique. Dans ce dernier cas, l'adaptation en puissance est réalisée en choisissant bien le point de connexion sur ladite boucle magnétique. En outre, la longueur du brin d'antenne est limitée (par exemple à un maximum de l'ordre de 10 cm pour une fréquence centrale d'émission d'environ 430 MHz) de manière à assurer une adaptation d'impédance correcte.

Dans un second mode de réalisation, le doublet électrique est constituée par une boucle secondaire coopérant avec la boucle magnétique L reliée au collecteur de T et formant primaire, selon un couplage de type "autotransformateur".

La boucle secondaire est une boucle de périmètre plus grand, mise en court-circuit, dont le comportement est similaire à celui du doublet décrit précédemment. Concrètement, la boucle fermée du secondaire peut être accolée localement à la boucle primaire et elle peut être reliée localement par une connexion électrique à une borne d'alimentation du primaire, le point de connexion étant choisi de manière à assurer une adaptation d'impédance correcte.

Ici encore, le comportement de la boucle secondaire est de type résistif, c'est-à-dire qu'aucune variation de la fréquence centrale du circuit oscillant n'est induite par son adjonction.

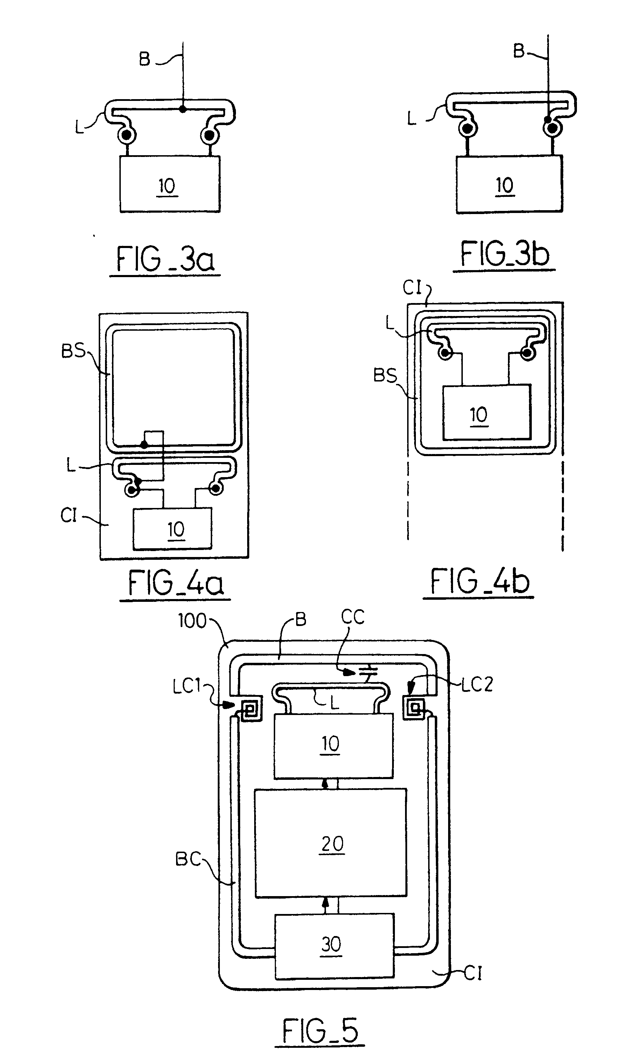

Les figures 3a et 3b illustrent deux formes de réalisation concrète de la variante à brin d'antenne. La boucle magnétique L est réalisée sous la forme d'une piste d'un circuit imprimé CI qui supporte par ailleurs le circuit d'émission détaillé plus haut, indiqué globalement en 10. Le brin d'antenne B est un fil électrique essentiellement rectiligne qui part du circuit imprimé, et qui peut être par exemple noyé dans une matière d'enrobage et de protection de la carte électronique. Dans la réalisation de la figure 3a, le brin d'antenne B est relié en un point intermédiaire de la boucle magnétique L. Sur la figure 3b, le brin est relié directement à la sortie du circuit oscillateurmodulateur.

La figure 4a et 4b illustrent deux réalisations concrètes de la variante à boucle secondaire. Sur la figure 4a, la boucle secondaire BS est de forme essentiellement carrée et prévue sur un prolongement de dimensions appropriées de la carte de circuit imprimé CI.

En figure 4b, la boucle secondaire BS est également essentiellement carrée, mais est dimensionnée de façon à entourer la boucle primaire L et le circuit oscillateur-modulateur 10.

La figure 5 est destinée à illustrer le cas où la carte électronique, globalement indiquée en 100, comporte en outre un circuit de réception d'un rayonnement radioélectrique à une fréquence sensiblement plus basse (par exemple de l'ordre de 120 kHz) que la fréquence d'émission utilisée dans le circuit d'émission de l'invention. Concrètement, il peut s'agir d'une carte électronique capable d'émettre un message d'identification à l'attention d'un module électronique de bord d'un véhicule automobile à l'aide des moyens d'émission de l'invention dès réception par le circuit de réception du signal d'interrogation contenu dans le rayonnement électrique à fréquence plus basse.

Un tel circuit de réception 30 comporte une boucle de courant BC formant antenne-cadre de réception.

Selon un aspect avantageux de l'invention, le brin d'antenne B pour l'émission en UHF est constitué par une partie de la boucle BC. Deux selfs de choc LC1 et LC2 délimitent le brin d'antenne. Un condensateur de couplage CC relie par ailleurs le brin d'antenne à un point intermédiaire du doublet magnétique L.

De préférence, l'ensemble de ces éléments, y compris les selfs LC1 et LC2, mais à l'exception du condensateur CC, sont réalisés sous la forme de pistes d'un circuit imprimé unique CI sur lequel sont implantés le circuit émetteur 10 de l'invention, un module logique de contrôle 20 de la carte et le circuit récepteur à basse fréquence 30. La boucle de courant BC incluant le brin d'antenne B est préférentiellement disposée à la périphérie du circuit imprimé.

Dans le mode d'émission à haute fréquence, le condensateur CC est transparent vis-à-vis des signaux, tandis que les deux selfs de choc isolent le brin d'antenne B du reste de la boucle BC.

Au contraire, dans le mode de réception à basse fréquence, les deux selfs LC1 et LC2 sont transparentes vis-à-vis des signaux reçus, tandis que le condensateur CC assure une isolation entre la boucle BC fermée et le circuit d'émission 10.

Pratiquement, un circuit d'émission de la présente invention permet de rayonner avec une puissance de l'ordre de 0,4 milliwatt, en étant alimenté sous une tension continue d'environ 5,5 volts et en consommant un courant d'environ 8 à 10 mA.

Bien entendu, la présente invention n'est nullement limitée à la forme de réalisation décrite ci-dessus et représentée sur les dessins, mais l'homme de l'art saura y apporter toute variante ou modification conforme à son esprit.

## Revendications

1. Circuit d'émission radiofréquence pour un dispositif électronique autonome alimenté par batterie, notamment pour l'envoi de données d'identification dudit dispositif ou d'un porteur de celui-ci, caractérisé en ce qu'il comprend un circuit d'oscillation et de modulation (10) dans la gamme des ultra-hautes fréquences et une antenne comprenant un doublet magnétique (L) auquel est couplé un doublet électrique (B; BS).

2. Circuit selon la revendication 1, caractérisé en ce que le doublet magnétique consiste en une première boucle simple (L), fermée sur la sortie du circuit d'oscillation et de modulation (10), et en ce que le doublet électrique consiste en une seconde boucle simple (BS), fermée sur elle-même, localement accolée à la première boucle et reliée à une borne de sortie du circuit d'oscillation et de modulation, les première et seconde boucles se comportant respectivement comme le primaire et le secondaire d'un couplage de type autotransformateur.

3. Circuit selon la revendication 2, caractérisé en ce que les première et seconde boucles (L, BS) sont réalisées sous forme de pistes d'un circuit imprimé (CI).

4. Circuit selon la revendication 3, caractérisé en ce que la seconde boucle (BS) est située sur un prolongement du circuit imprimé (CI) portant la première boucle (L) et le circuit d'oscillation et de modulation (10).

5. Circuit selon la revendication 3, caractérisé en ce que la seconde boucle (BS) est située autour de la première boucle (L) et du circuit d'oscillation et de modulation (10).

6. Circuit selon la revendication 1, caractérisé en ce que le doublet magnétique consiste en une boucle simple (L) fermée sur la sortie du circuit d'oscillation et de modulation (10) et en ce que le doublet électrique consiste en un brin d'antenne (B).

7. Circuit selon la revendication 6, caractérisé en ce que le brin d'antenne (B) est relié directement à une sortie du circuit d'oscillation et de modulation (10).

8. Circuit selon la revendication 6, caractérisé en ce que le brin d'antenne (B) est couplé à la boucle magnétique (L) en un point intermédiaire de celle-ci.

9. Circuit selon l'une des revendications 7 et 8, pour un dispositif électronique (100) comportant en outre un circuit de réception (30) de signaux radioélectriques via une antenne formée par une boucle de courant (BC), caractérisé en ce que le brin d'antenne (B) est constitué par une partie de ladite boucle de courant et est délimité deux selfs de choc (LC1, LC2), et en ce que le couplage entre le brin d'antenne et le doublet magnétique est réalisée via un condensateur (CC).

10. Circuit selon l'une des revendications 6 à 9, caractérisé en ce que le doublet magnétique (L) et le brin d'antenne (B) sont réalisés sous forme de pistes d'un circuit imprimé (CI).

FIG_1

FIG_2

FIG _3a

FIG _3b

FIG _4a

FIG _4b

FIG _5

EP 0 451 059 A1

Office européen des brevets

**RAPPORT DE RECHERCHE EUROPEENNE**

Numero de la demande

EP 91 40 0930

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-C-1 506 858 (CAMBORNAC et al.) <br> * Colonne 5, lignes 47-67; colonne 6, ligne 67 – colonne 7, ligne 23; figures 7,8a,9c * | 1 | G 06 K 19/07 |
| A | --- | 6,8,10 | |
| A | US-A-3 707 711 (COLE et al.) <br> * Colonne 4, lignes 1-14; colonne 5, ligne 52 – colonne 6, ligne 3; revendication 14; figures 3,6 * <br> --- | 1,10 | |
| A | WO-A-8 800 785 (B.I. INC.) <br> * Abrégé; page 5, lignes 18-37; page 20, lignes 3-17; figure 9 * <br> ----- | 1 | |
| | | | **DOMAINES TECHNIQUES RECHERCHES (Int. Cl.5)** <br><br> G 06 K |

Le présent rapport a été établi pour toutes les revendications

| Lieu de la recherche | Date d'achèvement de la recherche | Examinateur |
|---|---|---|
| LA HAYE | 19-06-1991 | SCHINNERL A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

9